# EUROPEAN PATENT SPECIFICATION

(11) **EP 1 830 114 B1**
(45) Date of publication and mention of the grant of the patent: **27.05.2009**
(21) Application number: 06110561.5
(22) Date of filing: 01.03.2006
(51) Int. Cl.: F16K 15/14

(54) **One way slit valve**
Geschlitztes Einwegventil
Soupape de non-retour fendue

(43) Date of publication of application: 05.09.2007
(73) Proprietor: Intelligent Environmental Services B.V., 1822 CD Alkmaar (NL)
(72) Inventor: Van Baar, Jacobus Eldert Maria, 1862 VD Bergen (NL)
(74) Representative: Voncken, Bartholomeus Maria Ch.

(56) References cited:
- EP-A- 0 727 531
- EP-A- 1 529 888
- US-A- 4 014 048
- US-A- 5 193 585
- US-A- 5 727 593

## Description

The invention relates to a one way slit valve, in particular for use in a conveying line for liquids, comprising a body having a first upstream end (in use) and a second downstream end (in use), wherein the upstream end of the body is continuously open and wherein at least part of the downstream end of the body is formed of a deformable material defining therein a slit-like opening which is biased to a closed position and which can be opened by the pressure of a liquid flowing into the open first upstream end through the body towards the second downstream end, which slit-like opening of the second downstream end of the body extends fully across said downstream end between opposite points on the outer circumference of the downstream end..

Such one way slit valves are known in many embodiments (see, for example, the documents EP-A-727 531 and US-A-5 193 585), and sometimes also are referred to as non-return valves. When installed in a liquid line, the pressure buildup of a liquid flowing downstreams will cause the one way slit valve to open at its downstream end, thus allowing a liquid stream in a downstream direction. A reverse, upstream, liquid flow is prevented however because the slit-like opening at the downstream end of the body will close due to the bias of the deformable material the second end is made of.

Although such a one way slit valve generally operates in a very reliable manner, circumstances might arise under which its operation is endangered. For example, when in the liquid line a high back-pressure is generated (which will act on the outside of the downstream end of the body) there is a risk that the second downstream end of the body at least partially collapses or is deformed such that the slit-like opening does not maintain its fully closed position.

For overcoming this disadvantage, one way slit valves of the above mentioned type have been developed in which at or near the downstream end reinforcing means are provided in the body which seek to prevent such a collaps or deformation of the downstream end (see, for example, the flexible, resilient rod of US-A-5 193 585. Although such means indeed improve the behaviour of the one way slit valve when subjected to a back-pressure, a disadvantage of the provision of such means is that the positive pressure (pressure acting on the inside of the downstream end of the body) required for opening the slit-like opening is increased, such that the use of the one way slit valve in situations with small pressure differences becomes troublesome.

In accordance with the state of the art the slit-like opening also extends through said circumferential wall and ends at the outer side of such circumferential wall. This offers the second downstream end of the body an improved deformability, as a result of which the one way slit valve will respond to smaller positive pressures. Surprisingly, however, the prolongation of the slit-like opening does not have a detrimental effect on its sealing effectivity. As a result, a one way slit valve is obtained which already opens at small positive pressures and which securely closes, and remains closed, at back-pressures.

It is noted that the expression 'opposite points on the outer circumference' does not necessarily mean that these point are located diametrically.

It is an object of the present invention to provide an improved one way slit valve of the type referred to above.

Thus, in accordance with the present invention, the one way slit valve is characterized in that the outer parts of the slit-like opening, which extend through a circumferential wall of the body, have a bottom extending inclined relative to the slit-like opening. The possibility of choosing such inclined shapes of the slit-like opening at the circumferential wall offers the advantage that one can vary the deformability of the body at its second downstream end, and thus one can define the pressure at which the one way slit valve will respond to a positive pressure (and will open).

For example, in accordance with yet another embodiment of the one way valve according to the present invention the bottom of said outer parts of the slit could extend, as seen in an outward sense, inclined downstreams. In such an embodiment the circumferential wall is not fully slit and the deformability is only increased moderately.

The one way valve according to the present invention may come in many different shapes. Preferably, however, the second downstream end of the body substantially comprises a rectangular cross-section with a minor and major dimension, wherein the slit extends in the direction of the major dimension.

Further, as is known per se and, for example, has been described in EP-A-1.529.888 in the name of the present applicant, the one way slit valve may be accomodated in a liquid-tight housing surrounding the body and comprising connections at both ends for being connected to liquid conveying lines. However, the one way slit valve according to the invention also may be devised for being positioned directly within a liquid conveying line, in which case generally at least the first upstream end of the body will have a circumferential wall cooperating in a sealing manner with an inner wall of the liquid conveying line.

It should be noted that the present one way slit valve, although being described particularly for use in a liquid conveying line, also could be used for regulating the flow of other fluids, such as gases.

Hereinafter, the invention will be elucidated while referring to the drawing, in which
Fig.1 shows perspectively a one way slit valve according to the invention;
Fig.2 shows a frontal view of the downstream end of the valve of fig.1;
Fig.3 shows, on a larger scale, partial cross-sections according to III-III in fig.2 of known valves (fig.3a and 3b) and of an embodiment of the valve according to the invention (fig.3c), and
Fig.4 shows a cross-section according to IV-IV in fig.2.

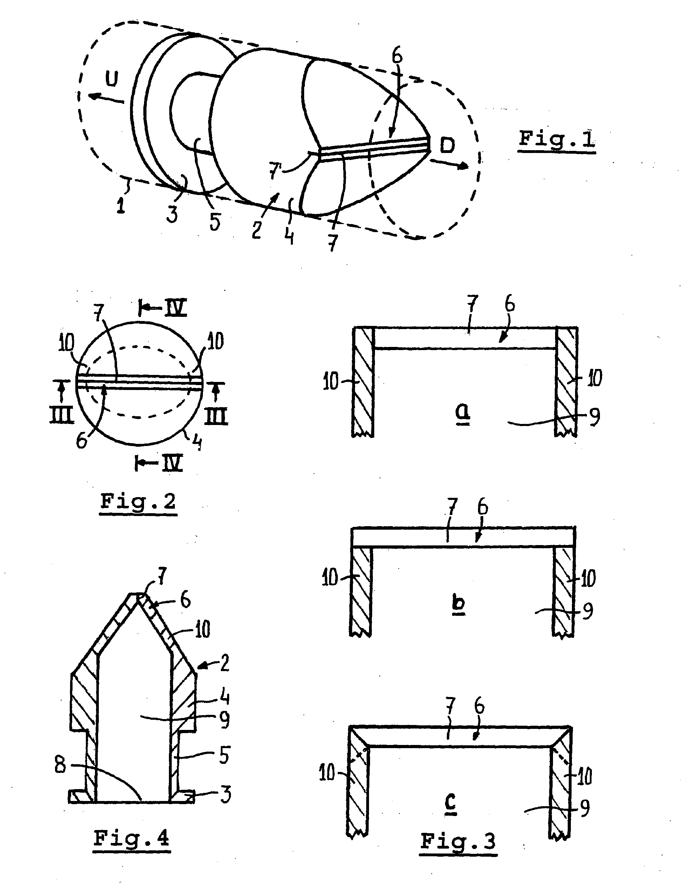

Firstly referring to fig.1, a line 1 for conveying a fluid, such as a liquid, is schematically indicated in broken lines. The direction of the fluid flow is indicated by arrow D (Downstream). Consequently, arrow U indicates the opposite direction (Upstream). Within the line 1 a one way slit valve 2 is positioned. In the illustrated embodiment the valve 2 comprises an upstream body end 3 and a central body section 4, both having a circumferential surface closely matching the inner wall of the line 1. As a result the valve 2 will only allow a flow of liquid therethrough, but not therearound.

The manner in which the valve maintains its longitudinal position within the line 1 may be divers, and is not illustrated here. A restricted body section 5 can be of use with respect thereto.

The valve 2 further comprises a downstream body end 6 which tapers to a substantially rectangular shape (when seen in cross-section) with a major dimension and a minor dimension. A slit-like opening 7 extends in said downstream body end 6 in the direction of the major dimension.

Also referring to the longitudinal cross-section according to fig.4, it can be seen that the upstream body end 3 is provided with an inflow opening 8 from which an inner channel 9 extends towards the downstream body end 6 with slit-like opening 7. The channel 9 is surrounded by a circumferential wall 10.

At least part of the downstream body end 6 (i.e. the wall 10) is made of a deformable material biasing the slit-like opening 7 towards the closed position illustrated in fig.4. When a liquid enters the opening 8, a pressure rise will occur in the channel 9 as a result of which the slit-like opening 7 will open, thus allowing the flow of liquid through the valve 2 in the downstream direction. However, when a back-pressure occurs at the downstream side of the valve, the slit-like opening 7 remains closed and therefore the valve will prevent a backflow (in the upstream direction) of the liquid.

As clearly illustrated in the frontal view according to fig.2, the slit-like opening 7 in the downstream body end 6 extends fully across said downstream end between opposite points on the outer circumference of the wall 10 at said downstream end. This has also been illustrated in fig.1 by reference number 7'.

In fig.3a a cross-section according to III-III in fig.2 is illustrated, however of a known state of the art valve. One can clearly see that the slit-like opening 7 in the downstream body end 6 at both ends stops at the inner side of the circumferential wall 10. As a result, the upper parts of the wall 10 adjoining the slit-like opening 7 will oppose to the movement of the slit-like opening 7 to its opened position.

Fig.3b and fig.3c also illustrate cross-sections according to III-III in fig.2, however in this case of embodiments of the valve in accordance with the state of the art and invention, respectively. It can be seen clearly, that the slit-like opening 7 in the downstream body end 6 extends fully across said downstream end between opposite points on the outer circumference of the wall 10 at said downstream end.

In the state of the art embodiment according to fig.3b the outer parts of the slit-like opening 7, which extend through the circumferential wall 10 of the downstream body end 6, have a bottom extending in parallel to the slit-like opening 7.

In the embodiment illustrated in fig.3c the outer parts of the slit-like opening 7, which extend through said circumferential wall 10 of the downstream body end 6, have a bottom extending inclined relative to the slit-like opening 7. Specifically, in this embodiment, these outer parts have a bottom extending, as seen in an outward sense, inclined downstreams (it is reminded that in the views according to fig.3 the downstream end is at the top). However, they also could extend inclined upstreams (indicated by broken lines in fig.3c).

As a result of the slit-like opening extending until the outer side of the circumferential wall 10, opening of the slit-like opening 7 is less restricted by the wall 10 and, thus, may occur at a lower positive pressure within the channel 9.

The invention is not limited to the embodiments described before which may be varied widely within the scope of the invention as defined by the appending claims.

## Claims

1. One way slit valve (2), in particular for use in a conveying line (1) for liquids, comprising a body having in use a first upstream end (3) and a second downstream end (6), wherein the upstream end of the body is continuously open and wherein at least part of the downstream end of the body is formed of a deformable material defining therein a slit-like opening (7) which is biased to a closed position and which can be opened by the pressure of a liquid flowing into the open first upstream end through the body towards the second downstream end, which
slit-like opening of the second downstream end of the body extends fully across said downstream end between opposite points on the outer circumference of the downstream end, **characterized in that**
the outer parts of the slit-like opening (7), which extend through a circumferential wall (10) of the body, have a bottom extending inclined relative to the slit-like opening.

2. One way valve according to claim 1, wherein the bottom of said outer parts of the slit-like opening (7) extends, as seen in an outward sense, inclined downstreams.

3. One way valve according to any of the previous claims, wherein the second downstream end (6) of the body substantially comprises a rectangular cross-section with a minor and major dimension and wherein the slit-like opening (7) extends in the direction of the major dimension.

## Patentansprüche

1. Einwegschlitzventil(2), insbesondere zur Verwendung in einer Beförderungsleitung (1) für Flüssigkeiten, das einen Körper aufweist, der im Gebrauch ein erstes stromaufwärts gelegenes Ende (3) und ein zweites stromabwärts gelegenes Ende (6) aufweist, wobei das stromaufwärts gelegene Ende des Körpers andauernd offen ist und wobei mindestens ein Teil des stromabwärts gelegenen Endes des Körpers aus einem verformbaren Material ausgebildet ist, das darin eine schlitzförmige Öffnung (7) begrenzt, die zu einer geschlossenen Position vorgespannt ist und die durch den Druck einer Flüssigkeit geöffnet werden kann, die in das offene erste stromaufwärts gelegene Ende durch den Körper zum zweiten stromabwärts gelegene Ende fließt, wobei sich die schlitzförmige Öffnung des zweiten stromabwärts gelegenen Endes des Körpers vollständig zwischen gegenüberliegenden Punkten am Außenumfang des stromabwärts gelegenen Endes über das stromabwärts gelegene Ende erstreckt,
**dadurch gekennzeichnet, daß**
die Außenteile der schlitzförmigen Öffnung (7), die sich durch eine Umfangswand (10) des Körpers erstrecken, einen untersten Teil aufweisen, der sich relativ zur schlitzförmigen Öffnung geneigt erstreckt.

2. Einwegventil nach Anspruch 1, wobei sich der unterste Teil der Außenteile der schlitzförmigen Öffnung (7) in eine Richtung nach außen gesehen geneigt stromabwärts erstreckt.

3. Einwegventil nach einem der vorhergehenden Ansprüche, wobei das zweite stromabwärts gelegene Ende (6) des Körpers im wesentlichen einen rechteckigen Querschnitt mit einer kleineren und größeren Abmessung aufweist und wobei sich die schlitzförmige Öffnung (7) in die Richtung der größeren Abmessung erstreckt.

## Revendications

1. Soupape anti-retour fendue (2), à utiliser en particulier dans une conduite de transport (1) pour liquides, comprenant on corps ayant, en cours d'utilisation, une première extrémité en amont (3) et une seconde extrémité en aval (6), dans laquelle l'extrémité en amont du corps est continuellement ouverte et dans laquelle au moins une partie de l'extrémité en aval du corps est formée d'un matériau déformable, définissant à l'intérieur une ouverture semblable à une fente (7), qui est inclinée vers une position fermée et qui peut être ouverte par la pression d'un liquide s'écoulant dans la première extrémité ouverte en amont à travers le corps, vers la seconde extrémité en aval, ladite ouverture semblable à une fente de la seconde extrémité en aval du corps s'étendant totalement à travers ladite extrémité en aval entre des points opposés sur la circonférence extérieure de l'extrémité en aval, **caractérisée en ce que** les parties extérieures de l'ouverture semblable à une fente (7), qui s'étendent à travers une paroi circonférentielle (10) du corps, ont une extrémité s'étendant de façon inclinée relativement à l'ouverture semblable à une fente.

2. Soupape anti-retour selon la revendication 1, dans laquelle l'extrémité desdites parties extérieures de l'ouverture semblable à une fente (7) s'étend, comme on le voit en regardant vers l'extérieur, de manière inclinée en aval.

3. Soupape anti-retour selon l'une quelconque des revendications précédentes, dans laquelle la seconde extrémité en aval (6) du corps comprend sensiblement une section transversale rectangulaire avec une dimension plus petite et une dimension plus grande, et dans laquelle l'ouverture semblable à une fente (7) s'étend dans le sens de la dimension plus grande.
